# EUROPÄISCHE PATENTANMELDUNG

(11) **EP 1 609 624 A1**
(43) Veröffentlichungstag der Anmeldung: **28.12.2005**
(21) Anmeldenummer: 04014772.0
(22) Anmeldetag: 24.06.2004
(51) Int. Cl.: B60C 11/00, B60C 11/18

(54) **Fahrzeugluftreifen**

(71) Anmelder: Continental Aktiengesellschaft, 30165 Hannover (DE)
(72) Erfinder: Stark, Anette, Dr., 30163 Hannover (DE); Söhnen, Dietmar, Dr., 31867 Lauenau (DE); Dettmer, Fabian, Dr., 38106 Braunschweig (DE); Rose, Christoph, Dr., 30161 Hannover (DE); Röger, Bernhard, 30823 Garbsen (DE); Peda, Karl, 31515 Wunstorf (DE); Kachel, Uwe, 38527 Meine (DE); Wistal, Hartmut, 31832 Springe (DE); Artal-Lahoz, Carmen, Dr., 30171 Hannover (DE)

(57) **Zusammenfassung**

Die Erfindung betrifft einen Fahrzeugluftreifen, insbesondere Radialreifen für Personenkraftwagen, mit einem Laufstreifen, dessen mit dem Untergrund in Kontakt tretender Bereich zumindest einen in Umfangsrichtung umlaufenden Laufstreifenabschnitt aus einer ersten Laufstreifenmischung und einen in Umfangsrichtung umlaufenden Laufstreifenabschnitt aus einer zweiten Laufstreifenmischung aufweist, wobei die erste Laufstreifenmischung härter ist und einen größeren Speichermodul E' aufweist als die zweite Laufstreifenmischung, und wobei zumindest einem der beiden Schulterbereiche benachbart ein Laufstreifenabschnitt aus der weicheren und einen geringeren Speichermodul E' aufweisenden Mischung angeordnet ist.

Der Laufstreifen ist derart in radialer Richtung geschichtet, dass radial innerhalb des Abschnittes (8, 8') aus der weicheren Mischung eine Unterschicht (7a, 7'a) aus einer Mischung mit einer höheren Shore A Härte und einem höheren Speichermodul E' angeordnet ist, wobei die radiale Erstreckung des geschichteten Bereiches jener des Abschnittes (7, 7') aus der härteren Mischung entspricht.

## Beschreibung

Die Erfindung betrifft einen Fahrzeugluftreifen, insbesondere einen Radialreifen für Personenkraftwagen, mit einem Laufstreifen, dessen mit dem Untergrund in Kontakt tretender Bereich zumindest einen in Umfangsrichtung umlaufenden Laufstreifenabschnitt aus einer ersten Laufstreifenmischung und einen in Umfangsrichtung umlaufenden Laufstreifenabschnitt aus einer zweiten Laufstreifenmischung aufweist, wobei die erste Laufstreifenmischung härter ist und einen größeren Speichermodul E' aufweist als die zweite Laufstreifenmischung, und wobei in zumindest einem der beiden Schulterbereiche ein Laufstreifenabschnitt aus der weicheren und einen geringeren Speichermodul E' aufweisenden Mischung angeordnet ist.

Ein derartiger Fahrzeugluftreifen ist aus der US 6,719,025 A bekannt. Dieser Reifen weist einen Laufstreifen mit einer asymmetrischen Profilierung auf, wobei, über den Umfang betrachtet, zwei Laufstreifenabschnitte aus verschiedenen Mischungen vorgesehen sind und gemäß einer bevorzugten Ausführungsform der eine Laufstreifenabschnitt ein anderes Profilmuster aufweist als der zweite Laufstreifenabschnitt. Der Laufstreifenabschnitt, welcher bei am Fahrzeug montierten Reifen der Fahrzeuglängsachse näher liegt und den Innenschulterbereich des Reifens umfasst, ist aus einer Laufstreifenmischung hergestellt, deren Härte und deren Speichermodul E' geringer ist als jene bzw. jener der Laufstreifenmischung, aus welcher der andere Laufstreifenabschnitt hergestellt ist. Ein Reifen mit einem derart ausgeführten Laufstreifen soll im Handling und im Komfort verbessert sein.

Die EP 1 308 319 A befasst sich mit einem Fahrzeugreifen, welcher insbesondere für den Einsatz unter winterlichen Fahrbedingungen vorgesehen ist und welcher besonders ausgewogene Winterfahreigenschaften aufweisen soll. Der Laufstreifen dieses Fahrzeugluftreifens besteht in bekannter Weise aus einem Laufstreifenunterteil und einem Laufstreifenoberteil, welcher aus zumindest zwei sich in ihrer Mischungszusammensetzung unterscheidenden Umfangsabschnitten besteht. Dabei ist der die Außenschulter des Laufstreifens umfassende Abschnitt aus einer Mischung mit einer höheren Glasübergangstemperatur hergestellt als der die Innenschulter umfassende Abschnitt des Laufstreifens.

Aus dem US Patent 4,385,653 ist ebenfalls ein Reifen mit einem Laufstreifen bekannt, welcher sich aus Umfangsabschnitten aus unterschiedlichen Kautschukmischungen zusammensetzt, um den Rollwiderstand zu reduzieren. So ist hier der Laufstreifen derart ausgeführt, dass der Laufstreifenmittelbereich aus einer Gummimischung mit einem geringen Hystereseverlust und die Seitenbereiche aus einer Gummimischung mit einem höheren Hystereseverlust bestehen.

Eine Anzahl weiterer Patentanmeldungen hat Ausführungen von Laufstreifen zum Gegenstand, die Laufstreifenabschnitte aus unterschiedlichen Mischungen aufweisen. So ist es beispielsweise aus der EP 1 184 205 A bekannt, einen Laufstreifen aus zwei unterschiedlichen und voneinander abgegrenzten Mischungskomponenten herzustellen, bei welchem die reifeninnenseitig gelegene Komponente hinsichtlich Verschleißfestigkeit und Rollwiderstand optimiert ist und die reifenaußenseitig gelegene Komponente aus einer hinsichtlich des Griffes optimierten Mischung hergestellt ist. Der aus der EP 0 686 515 B bekannte Fahrzeugluftreifen mit einer axial geteilten Lauffläche ist derart ausgeführt, dass ein fahrzeugäußerer Streifen, der eine Breite zwischen 20 und 25 % der gesamten Aufstandsflächenbreite aufweist, aus einer Mischung hergestellt ist, die höchstens 70 % der Abriebvolumens zeigt wie jene Mischung, aus welcher der übrige Bereich der Lauffläche besteht. Aus der JP 11321237 A ist ein asymmetrisch ausgeführter Laufstreifen bekannt, dessen der Außenschulter benachbarte Laufstreifenabschnitt aus einer härteren Mischung besteht.

Der Erfindung liegt die Aufgabe zu Grunde, einen Fahrzeugluftreifen der eingangs genannten Art hinsichtlich seiner Eigenschaften bei seitlich einwirkenden Kräften zu optimieren und gleichzeitig einen guten Nassgriff sicher zu stellen.

Gelöst wird die gestellte Aufgabe erfindungsgemäß dadurch, dass der Laufstreifen derart in radialer Richtung geschichtet ist, dass radial innerhalb des Abschnittes aus der weicheren Mischung eine Unterschicht aus einer Mischung mit einer höheren Shore A Härte und einem höheren Speichermodul E' angeordnet ist, wobei die radiale Erstreckung des geschichteten Bereiches jener des Abschnittes aus der härteren Mischung entspricht.

Durch die erfindungsgemäße Schichtung in radialer Richtung, indem eine härtere Mischung mit dem höheren Speichermodul E' unterhalb der weicheren Mischung angeordnet ist, können die lateralen Reifeneigenschaften besonders vorteilhaft beeinflusst werden. Die weichere Mischung stellt einen guten Nassgriff sicher, die darunter befindliche steifere Mischung erhöht insgesamt die Steifigkeit und die Stabilität in diesem Laufstreifenbereich, wodurch das Handling bei Kurvenfahrt und das Ansprechverhalten des Reifens auf Lenkkräfte besonders positiv beeinflusst werden.

Bei einer bevorzugten Ausführungsform der Erfindung ist die Unterschicht ein Bestandteil des Abschnittes aus der härteren Mischung. Dies vereinfacht die Herstellung erfindungsgemäßer Reifen, wobei es grundsätzlich auch möglich ist, für die Unterschicht eine weitere Mischung vorzusehen. In diesem Fall ist es jedoch von Vorteil, wenn die Mischung der Unterschicht mit der Mischung des Abschnittes aus der härteren Mischung zumindest im Wesentlichen übereinstimmt.

Für eine optimale Beeinflussung der lateralen Reifeneigenschaften, worunter beispielsweise das Handling bei Kurvenfahrt, das Ansprechverhalten des Reifens auf Lenkkräfte und das Aquaplaningverhalten des Reifens bei Kurvenfahrt und unter Seitenkräften zu verstehen sind, sind einige Mischungseigenschaften von besonderem Vorteil. So sollte insbesondere die Shore-A-Härte des härteren Abschnittes bzw. der Unterschicht um mindestens fünf Härtegrade größer sein, als jene des weicheren Abschnittes.

In diesem Zusammenhang ist es auch günstig, wenn der Speichermodul E' bei 0° C des härteren Abschnittes bzw. der Unterschicht um das 2,4- bis 11-fache größer ist als jener des weicheren Abschnittes und der Verlustmodul E" bei 0° C des härteren Abschnittes bzw. der Unterschicht um das 2- bis 18-fache größer ist als jener des weicheren Abschnittes.

Erfindungsgemäß ausgeführte Reifen können mit einem asymmetrischen Laufstreifen, welcher somit einen Außen- und Innenschulterbereich aufweist, versehen sein, wobei die Innenschulter bei am Fahrzeug montierten Reifen der Fahrzeuglängsachse näher zu liegen hat. In diesem Fall ist es für die Nassgriffeigenschaften des Reifens von besonderem Vorteil, wenn der weichere Abschnitt dem Innenschulterbereich benachbart ist und über eine Breite verläuft, die 50 bis 80 % der Laufstreifenbreite beträgt.

Bei Fahrzeugluftreifen, die keinen definierten Außen- und Innenschulterbereich aufweisen, wird der Laufstreifen bevorzugt derart ausgeführt, dass er zwei symmetrisch zur Äquatorlinie des Reifens verlaufende Abschnitte aus der weicheren Mischung aufweist, welche bis zu den Schulterbereichen verlaufen und zwischen welchen der Abschnitt aus der härteren Mischung angeordnet ist. Dabei sollte dieser Abschnitt eine Breite aufweisen, die zwischen 20 und 60 % der Breite des Laufstreifens beträgt. Auf diese Weise kann der Reifen bezüglich seiner Nassgriffeigenschaften und seiner lateralen Reifeneigenschaften besonders ausgewogen ausgeführt werden.

Weitere Merkmale, Vorteile und Einzelheiten der Erfindung werden nun anhand der Zeichnung, welche schematisch Ausführungsbeispiele darstellt, näher beschrieben. Dabei zeigen
Fig. 1 einen Querschnitt durch eine Ausführungsform eines erfindungsgemäßen Fahrzeugreifens im Bereich des Laufstreifens und
Fig. 2 eine zweite Ausführungsform der Erfindung ebenfalls anhand eines Querschnittes im Bereich des Laufstreifens.

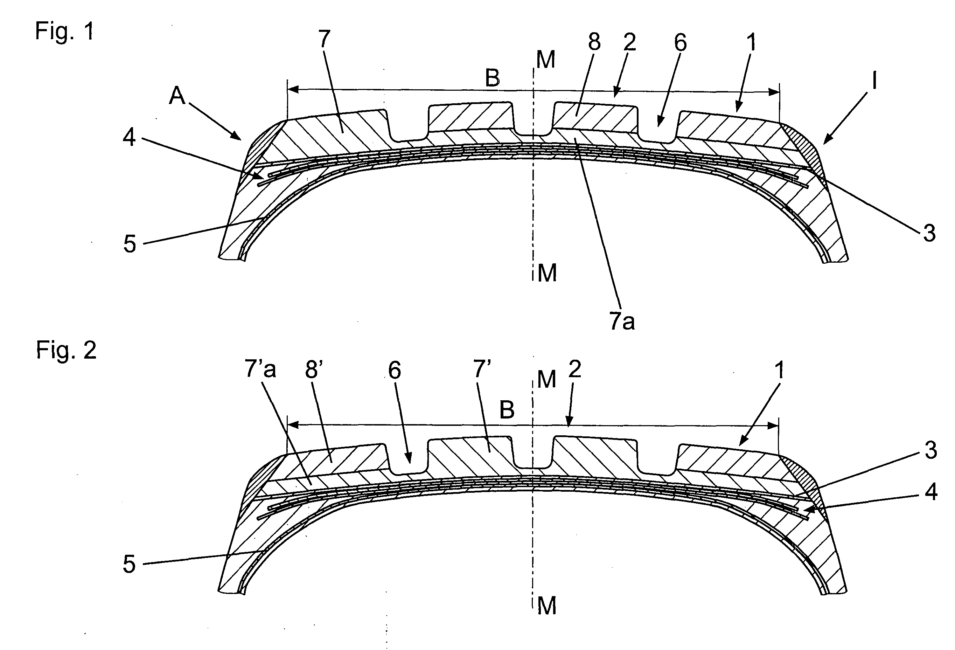

Die Schnittdarstellungen gemäß Fig. 1 und Fig. 2 zeigen den Laufstreifen eines PKW Radialreifens mit einem aus einem Laufstreifenoberteil 2 und einem Laufstreifenunterteil 3 bestehenden Laufstreifen 1, einem unterhalb des Laufstreifens 1 angeordneten, in der dargestellten Ausführungsform aus zwei Lagen bestehenden Gürtel 4 und einer Radialkarkasse 5. Der Gürtel 4, die Radialkarkasse 5 und die weiteren nicht gezeigten Bauteile des Reifens können in bekannter Weise ausgeführt sein. Der Laufstreifen 1 ist mit einer Profilierung versehen, die nicht Gegenstand dieser Erfindung ist und von welcher lediglich aus illustrativen Gründen und beispielhaft Umfangsnuten 6 angedeutet sind. Die strichlierte Linie M-M versinnbildlicht die den Reifen in zwei gleich große Teile teilende Äquatorebene. B bezeichnet die Laufstreifenbreite über jenen Bereich, welcher beim Abrollen des Reifens (unter den gemäß den ETRTO Standards genormten Benennungen) mit dem Untergrund in Kontakt tritt. Der Laufstreifenoberteil 2 verläuft an der Peripherie über die Breite B und radial innerhalb derselben über diese hinaus in die Schulterbereiche A, I des Reifens. Der wesentlich dünner als der Laufstreifenoberteil 2 ausgeführte Laufstreifenunterteil 3 kann aus einer der üblichen Base-Kautschukmischungen bestehen bzw. hergestellt sein, insbesondere aus einer etwas härteren Mischung, die jedoch nicht Gegenstand dieser Erfindung ist.

Fig. 1 zeigt eine Ausführung eines Reifens mit einem asymmetrisch ausgeführten Laufstreifen. Darunter sind Laufstreifen zu verstehen, die in mindestens zwei Umfangsbereiche mit unterschiedlichen Profilierungen geteilt sind. Diese Umfangsbereiche können sich bezüglich des Positivanteils, der Anzahl der Pitches oder dergleichen und / oder überhaupt im Profilmuster unterscheiden. Solche Reifen weisen dann auch Laufstreifenbereiche auf, die der Außenschulter A und der Innenschulter I benachbart sein sollen, sodass sie auf entsprechende Weise am Fahrzeug zu montieren sind. Im Bereich der Reifenschultern sind nicht bezeichnete Schulterstreifen vorgesehen. Wie Fig. 1 zeigt besteht das Laufstreifenoberteil des Laufstreifens 1 aus zwei Abschnitten 7, 8 aus unterschiedlichen Gummimischungen. Der Abschnitt 7 ist dem Außenschulterbereich A benachbart und grenzt in einem Abstand vor der Äquatorebene M-M an den zweiten Abschnitt 8. Dabei bildet die Gummimischung des Abschnittes 7 bis zur Innenschulter I eine Unterschicht 7a unter dem zweiten Abschnitt 8. Die Unterschicht 7a und der Abschnitt 8 sind zumindest im Wesentlichen in konstanter Dicke ausgeführt, wobei der Abschnitt 8 bis auf eine Tiefe reichen kann, die geringfügig größer ist als die Profiltiefe, die bei PKW-Reifen im allgemeinen 6 bis 8 mm beträgt. Bevorzugt wird der Abschnitt 8 derart dick ausgeführt, dass er auf mindestens 75 % der vorgesehenen maximalen Profiltiefe reicht bzw. mindestens bis zur gesetzlichen Mindestprofiltiefe reicht. Der Abschnitt 7 weist eine Dicke auf, die in Summe der Dicke der Unterschicht 7a und der Dicke des Abschnittes 8 entspricht und nimmt zwischen 20 und 50 % der Laufstreifenbreite B ein.

Fig. 2 zeigt eine Ausführung für einen symmetrisch ausgeführten Reifen bzw. einen Reifen mit einem Laufstreifen 1, dessen Profil derart gestaltet ist, dass es keinen definierten Außenschulter- oder Innenschulterbereich aufweist. Der Laufstreifen 1 besteht aus zwei Abschnitten 8' und einem Abschnitt 7'. Die Abschnitte 8' sind symmetrisch zur Äquatorlinie M-M und analog zu Fig. 1 auf Unterschichten 7'a des im Zentralbereich des Laufstreifens verlaufenden Abschnittes 7' angeordnet. Sie reichen daher in einem gewissen Abstand von der Äquatorebene M-M beginnend bis zu den Laufstreifenrändern bzw. zu den beiden Schulterbereichen. Der Abschnitt 7' nimmt eine Breite von 20 bis 60 % der Laufstreifenbreite B ein.

Wie bereits erwähnt unterscheidet sich die Laufstreifenmischung für die Abschnitte 7, 7' von jener für die Abschnitte 8, 8'. Die Abschnitte 7 bzw. 7' sind aus einer Laufstreifenmischung hergestellt, die eine höhere Steifigkeit aufweist als die Laufstreifenmischung für die Abschnitte 8, 8', welche in Folge ihrer geringeren Steifigkeit bessere Nassgriffeigenschaften aufweist. Von besonderer Bedeutung ist, dass die Mischung mit der höheren Steifigkeit als Unterschicht 7a bzw. Unterschichten 7'a auch unterhalb der Abschnitte 8, 8' verlaufen, sodass eine horizontale Schichtung dieser unterschiedlichen Mischungen vorliegt, bei der eine Gummimischung mit höherer Steifigkeit unterhalb einer Gummimischung mit geringerer Steifigkeit verläuft. Die erfindungsgemäße Kombination zweier Mischungen in geschichteten Laufstreifenabschnitten hat besonders vorteilhafte Auswirkungen auf die lateralen Reifeneigenschaften, wie Kurvenfahrt, Seitenführung und Aquaplaning bei Kurvenfahrt.

In Tabelle 1 sind beispielhaft die wichtigsten Bestandteile eines Mischungskonzeptes 1 (für die Abschnitte 7, 7') und eines Mischungskonzeptes 2 (für die Abschnitte 8, 8') und deren bevorzugte Bereiche für ihre Anteile angegeben. Die Anteile sind jeweils auf 100 Gewichtsteile Kautschuk in der Mischung bezogen. Beide Mischungskonzepte 1, 2 basieren auf einem Polymersystem, welches eine oder mehrere der Kautschuke aus der Gruppe Naturkautschuk, Styrol-Butadien-Kautschuk und Butadien-Kautschuk in den angegebenen Anteilen enthält. Als weitere Bestandteile enthalten die Kautschukmischungen Ruß, Kieselsäure, Mineralöl, ZnO, Beschleuniger und Schwefel. Beide Mischungskonzepte 1, 2 enthalten diese Bestandteile in den für Laufstreifenmischungen üblichen Anteilen.

Die Tabelle enthält ferner je ein konkreteres Bespiel 1 für eine Kautschukmischung für die Abschnitte 7, 7' und eine weiteres Beispiel 2 für die Kautschukmischung für die Abschnitte 8, 8'. Der Kieselsäureanteil wird bevorzugt als ein mit einem Aktivator vermengtes Kieselsäuregranulat beigegeben. Bei beiden Mischungskonzepten 1, 2 beträgt der bevorzugte Anteil an Kieselsäure und Ruß zwischen etwa 70 bis 120 Gewichtsteile. Dabei enthält das Mischungskonzept 2 einen höheren Anteil an Kieselsäure und einen geringeren Anteil an Ruß. Das Verhältnis von Ruß zu Kieselsäure beträgt im Mischungskonzept 1 zwischen 0,8 und 2,3 und im Mischungskonzept 2 für die Schichten 8, 8' zwischen 0,05 und 0,3.

Des Weiteren enthält die Tabelle 1 Bereiche für Shore A Härten der Mischungskonzepte 1, 2 sowie konkrete Werte für Vulkanisate aus den Mischungsbespielen 1 und 2. Analoges gilt für die für die Rückprallelastizität angegebenen Werte. Als weitere Messwerte sind der dynamische Speichermodul E', welcher ein Maß für die Steifigkeit ist, und der Verlustmodul E", welcher ein Maß für das Dämpfungsverhalten ist, angegeben. E und E" wurden mit einem Eplexor bei einer Temperatur von 0° C und einer Temperatur von 60° C ermittelt.

Gemäß der Erfindung sind die Abschnitte 7, 7' um mindestens 5 Härtegrade härter als die Abschnitte 8, 8'. Bei einer Temperatur von 0° C ist der dynamische Speichermodul E' der Abschnitte 7, 7' 2,4- bis 11-mal so groß wie jener des Abschnittes 8, 8'. Der Verlustmodul E" der Abschnitte 7, 7' ist bei 0° C 2- bis 18-mal so groß wie jener der Abschnitte 8, 8'. Bei einer Temperatur von 60° C ist E' für die Abschnitte 7, 7' um mindestens 2, 5 MPa größer, E" ist um mindestens 0,3 MPa größer als für die Abschnitte 8, 8'.

Die Erfindung ist auf die dargestellten und beschriebenen Ausführungsformen nicht eingeschränkt. So ist es insbesondere möglich, auf ein Laufstreifenunterteil zu verzichten. Die Unterschichten können auch aus einer weiteren und somit dritten Mischung bestehen, die gemäß Anspruch 1 ausgeführt ist.

**Tabelle 1**

| | **Mischungskonzept 1** | **Mischungskonzept 2** | **Beispiel 1** | **Beispiel 2** |
|---|---|---|---|---|
| **NR** | 0 - 15 | 0-20 | - | 20 |
| **SBR** | 80 - 100 | 50 - 100 | 80 | 70 |
| **BR** | 0 - 20 | 0 - 20 | 20 | 10 |
| **Kieselsäure** | 30 - 50 | 70 - 95 | 45 | 85 |
| **Ruß** | 40 - 70 | 5 - 20 | 48 | 13 |
| **Aromatisches Öl** | 25 - 45 | 25 - 45 | 38 | 33 |
| **ZnO** | 2,5 | 2,5 | 2,5 | 2,5 |
| **Beschleuniger** | 3 - 4 | 3,5 - 4,5 | 3,5 | 4,2 |
| **Schwefel** | 1,5 - 2,0 | 1,5 - 2,0 | 1,8 | 1,7 |
| **Shore A Härte** | 68 - 75 | 63 - 70 | 73 | 68 |
| **Rückprallelastizität in %** | 10 - 18 | 15 - 25 | 15 | 19 |
| **E' in (MPa) bei 0°C** | 200 - 450 | 40 - 85 | 336 | 63 |
| **E" in (MPa) bei 0°C** | 150 - 350 | 20 - 70 | 241 | 38 |
| **E' in (MPa) bei 60°C** | 6,5 - 10,5 | 4,0 - 8,5 | 8 | 6 |
| **E" in (MPa) bei 60°C** | 1,5 - 4,0 | 1,0 - 3,0 | 2 | 1 |

## Patentansprüche

1. Fahrzeugluftreifen, insbesondere Radialreifen für Personenkraftwagen, mit einem Laufstreifen, dessen mit dem Untergrund in Kontakt tretender Bereich zumindest einen in Umfangsrichtung umlaufenden Laufstreifenabschnitt aus einer ersten Laufstreifenmischung und einen in Umfangsrichtung umlaufenden Laufstreifenabschnitt aus einer zweiten Laufstreifenmischung aufweist, wobei die erste Laufstreifenmischung härter ist und einen größeren Speichermodul E' aufweist als die zweite Laufstreifenmischung, und wobei zumindest einem der beiden Schulterbereiche benachbart ein Laufstreifenabschnitt aus der weicheren und einen geringeren Speichermodul E' aufweisenden Mischung angeordnet ist,
**dadurch gekennzeichnet,**
**dass** der Laufstreifen derart in radialer Richtung geschichtet ist, dass radial innerhalb des Abschnittes (8, 8') aus der weicheren Mischung eine Unterschicht (7a, 7'a) aus einer Mischung mit einer höheren Shore A Härte und einem höheren Speichermodul E' angeordnet ist, wobei die radiale Erstreckung des geschichteten Bereiches jener des Abschnittes (7, 7') aus der härteren Mischung entspricht.

2. Fahrzeugluftreifen nach Anspruch 1, **dadurch gekennzeichnet, dass** die Unterschicht (7a, 7'a) ein Bestandteil des Abschnittes (7, 7') aus der härteren Mischung ist.

3. Fahrzeugluftreifen nach Anspruch 1, **dadurch gekennzeichnet, dass** die Mischung der Unterschicht (7a, 7'a) mit der Mischung des Abschnittes (7, 7') aus der härteren Mischung zumindest im Wesentlichen übereinstimmt.

4. Fahrzeugluftreifen nach einem der Ansprüche 1 bis 3, **dadurch gekennzeichnet, dass** die Shore A Härte des härteren Abschnittes (7, 7') bzw. der Unterschicht (7a, 7'a) um mindestens fünf Härtegrade größer ist als jene des weicheren Abschnittes (8, 8').

5. Fahrzeugluftreifen nach einem der Ansprüche 1 bis 4, **dadurch gekennzeichnet, dass** der Speichermodul E' bei 0° C des härteren Abschnittes (7, 7') bzw. der Unterschicht (7a, 7'a) um das 2,4- bis 11-fache größer ist als jener des weicheren Abschnittes (8, 8').

6. Fahrzeugluftreifen nach einem der Ansprüche 1 bis 4, **dadurch gekennzeichnet, dass** der Verlustmodul E" bei 0° C des härteren Abschnittes (7, 7') bzw. der Unterschicht (7a, 7'a) um mindestens das 2- bis 18-fache größer ist als jener des weicheren Abschnittes (8, 8').

7. Fahrzeugluftreifen nach einem der Ansprüche 1 bis 6, **dadurch gekennzeichnet, dass** der zumindest eine Abschnitt (8, 8') aus der weicheren Mischung eine radiale Erstreckung aufweist, die mindestens bis zur gesetzlichen Mindestprofiltiefe reicht.

8. Fahrzeugluftreifen nach einem der Ansprüche 1 bis 7 mit einem asymmetrisch ausgeführten Laufstreifen mit Außen- und Innenschulterbereich, wobei letzterer bei am Fahrzeug montiertem Reifen der Fahrzeuglängsachse näher liegt,
**dadurch gekennzeichnet,**
**dass** der weichere Abschnitt (8) dem Innenschulterbereich (I) benachbart ist und über eine Breite verläuft, die 50 bis 80 % der Laufstreifenbreite (B) beträgt.

9. Fahrzeugluftreifen nach einem der Ansprüche 1 bis 7, **dadurch gekennzeichnet, dass** der Laufstreifen zwei symmetrisch zur Äquatorlinie (M-M) des Reifens verlaufende Abschnitte (8') aus der weicheren Mischung aufweist, welche bis zu den Schulterbereichen verlaufen und zwischen welchen der Abschnitt (7') aus der härteren Mischung angeordnet ist.

10. Fahrzeugluftreifen nach Anspruch 9, **dadurch gekennzeichnet, dass** der Abschnitt (7') aus der härteren Mischung eine Breite aufweist, die 20 bis 60 % der Breite (B) des Laufstreifens beträgt.
